# EUROPEAN PATENT APPLICATION

(11) **EP 4 836 125 A1**
(43) Date of publication of application: **04.11.2026**
(21) Application number: 23962676.5
(22) Date of filing: 28.12.2023
(51) Int. Cl.: H01M 50/24, H01M 50/264, H01M 50/325, A62C 31/02

(54) **ENERGY STORAGE DEVICE AND FIRE EXTINGUISHING METHOD THEREFOR**

(71) Applicant: TCC Energy Storage Technology Corporation, Taipei City 104414 (TW)
(72) Inventor: CHANG, An-ping, ZHONGSHAN, TAIPEI CITY 104414 Taiwan (CN); LIAO, Ting-wei, ZHONGSHAN, TAIPEI CITY 104414 Taiwan (CN); CHEN, Po-yen, ZHONGSHAN, TAIPEI CITY 104414 Taiwan (CN)
(74) Representative: 2K Patent Partnerschaft mbB
(86) International application number: PCT/CN2023/142743
(87) International publication number: WO 2025/137995

(57) **Abstract**

The present disclosure provides an energy storage device and a fire extinguishing method therefor. The energy storage device comprises an energy storage cabinet and a fire extinguishing system. The energy storage cabinet comprises a cabinet body. The cabinet body is configured to withstand a flame at a temperature equal to or higher than about 150°C and has compressive strength greater than about 60 MPa, and the cabinet body is provided with an accommodating space used for accommodating at least one battery system. The fire extinguishing system comprises liquid injection devices and a liquid guide structure. The liquid injection devices are configured to inject liquid to the liquid guide structure, and the liquid guide structure is configured to disperse the liquid so that the liquid flows into the accommodating space of the cabinet body and immerses at least one battery system to extinguish a fire.

## Description

### Background of the Invention

### Field of the Invention

This disclosure essentially relates to an energy storage device and a fire extinguishing method therefor. More specifically, this disclosure relates to an energy storage device including a fire extinguishing system and a fire extinguishing method therefor.

### Description of the Prior Art

To improve use efficiency and flexibility of energy, development of energy storage devices has become a trend in recent years. With development and maturity of battery technologies (such as a lithium-ion battery), a battery energy storage device has become one of mainstream energy storage devices.

However, because various factors (for example, overcharging, an electronic control system error, an operating environment, or a manufacturing defect) cause contact between a positive electrode and a negative electrode, a battery may experience a short circuit. This triggers a highly exothermic chemical reaction, and ignites a flammable organic component within the battery. A high temperature generated by thermal runaway of the battery may further cause damage to a neighboring device of a battery energy storage device and occurrence of a fire accident.

### Summary of the Invention

In one or more embodiments, an energy storage device includes an energy storage cabinet and a fire extinguishing system. The energy storage cabinet includes a cabinet body, the cabinet body is configured to tolerate a flame at a temperature equal to or higher than approximately 150°C and have a compressive strength greater than approximately 60 MPa, and the cabinet body has an accommodating space for accommodating at least one battery system. The fire extinguishing system includes a liquid injection device and a liquid guiding structure, and the liquid guiding structure is configured to: disperse a liquid and allow the liquid to flow into the accommodating space of the cabinet body, and flood the at least one battery system for fire extinguishing.

In one or more embodiments, a fire extinguishing method for an energy storage device includes: providing an energy storage device, including an energy storage cabinet and a fire extinguishing system. The energy storage cabinet includes a cabinet body, the cabinet body is configured to tolerate a flame at a temperature equal to or greater than approximately 150°C and have a compressive strength greater than approximately 60 MPa, and the cabinet body has an accommodating space for accommodating at least one battery system. The fire extinguishing system includes a liquid injection device, a liquid guiding structure, and a fire sensor, and the liquid injection device is configured to inject a liquid into the accommodating space of the cabinet body and flood the at least one battery system for fire extinguishing. In addition, a flooding step is performed, including: in response to a first fire signal generated by the fire sensor, injecting the liquid into the liquid guiding structure by using the liquid injection device. The liquid guiding structure is configured to: disperse the liquid and allow the liquid to flow into the accommodating space of the cabinet body, and flood the at least one battery system for fire extinguishing.

In one or more embodiments, an energy storage device includes an energy storage cabinet and a fire extinguishing system. The energy storage cabinet includes a cabinet body, and the cabinet body has an accommodating space for accommodating at least one battery system. The cabinet body further includes a pressure relief valve, and the pressure relief valve is configured to open when a pressure in the accommodating space is greater than a threshold. The fire extinguishing system includes a liquid injection device and a liquid guiding structure, the liquid injection device is configured to inject a liquid into the liquid guiding structure, and the liquid guiding structure is configured to: disperse the liquid and allow the liquid to flow into the accommodating space of the cabinet body, and flood the at least one battery system for fire extinguishing.

### Brief description of the drawings

When the present disclosure is read with reference to the accompanying drawings, patterns of the present disclosure may be better understood according to the following implementations. It should be noted that various features may not be drawn to scale, and sizes of the various features may be arbitrarily enlarged or reduced to clearly describe the content of the present disclosure.
FIG. 1A is a schematic diagram of an energy storage device according to some embodiments of the present disclosure;
FIG. 1B is a flowchart of a fire extinguishing method for an energy storage device according to some embodiments of the present disclosure;
FIG. 2 is a perspective view of an energy storage device according to some embodiments of the present disclosure;
FIG. 3A is a partial schematic diagram of a cabinet body of an energy storage device according to some embodiments of the present disclosure;
FIG. 3B is a partial exploded view of a door of a cabinet body of an energy storage device according to some embodiments of the present disclosure;
FIG. 4 is a perspective view of a cabinet body of an energy storage device according to some embodiments of the present disclosure;
FIG. 5 is a schematic diagram of an energy storage device according to some embodiments of the present disclosure;
FIG. 6A is a perspective view of an energy storage device according to some embodiments of the present disclosure;
FIG. 6B is a partial enlarged view of a side portion of FIG. 6A.
FIG. 6C is a top view of a liquid injection device and a liquid guiding structure in FIG. 6A; and
FIG. 7 is a perspective view of an energy storage device according to some embodiments of the present disclosure.

In the drawings and implementations of the present disclosure, a same or similar element is represented by a same element symbol.

### Detailed Description

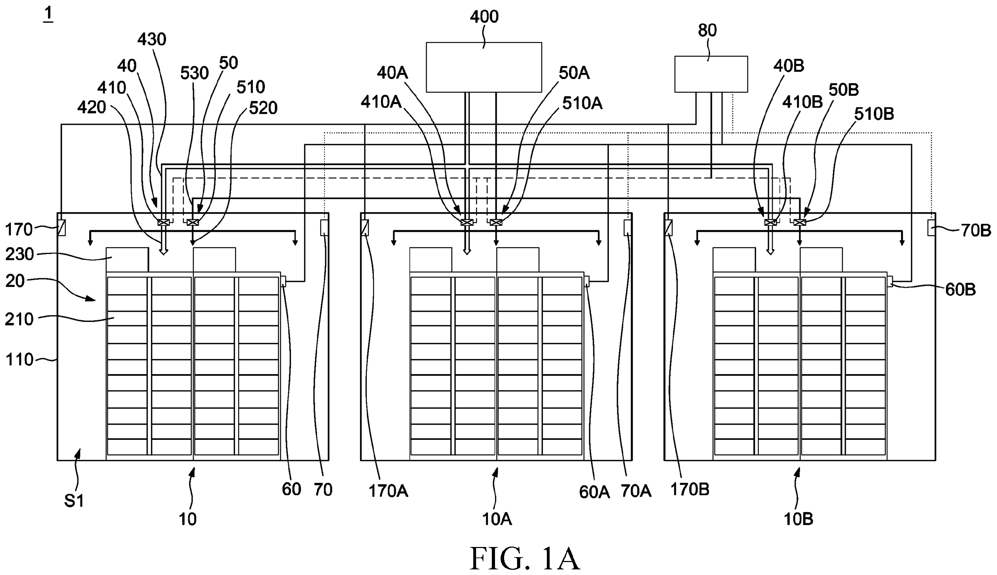

FIG. 1A is a schematic diagram of an energy storage device 1 according to some embodiments of the present disclosure.

Refer to FIG. 1A. The energy storage device 1 may include one or more energy storage cabinets (for example, energy storage cabinets 10, 10A, and 10B), one or more battery systems 20, a fire extinguishing system, and a control system 80. It should be noted that, the following describes the content of the present disclosure by using an example in which the energy storage device includes three energy storage cabinets 10, 10A, and 10B. However, a quantity of energy storage cabinets that may be included in the energy storage device 1 of the present disclosure is not limited thereto, and may be adjusted and changed based on actual application.

In some embodiments, the energy storage cabinets 10, 10A, and 10B may each include a cabinet body 110. Each of the cabinet body 110 has an accommodating space S1 for accommodating at least one battery system 20. In some embodiments, the energy storage cabinets 10, 10A, and 10B may further respectively include pressure relief valves 170, 170A, and 170B. In some embodiments, the pressure relief valves 170, 170A, and 170B are configured to open when pressures in accommodating spaces S1 respectively corresponding to the pressure relief valves 170, 170A, and 170B are greater than a threshold. In some embodiments, the threshold is less than a compressive strength of the cabinet body 110. According to some embodiments of the present disclosure, when the pressure relief valve is opened, a pressure (for example, a pressure generated by a gas in the accommodating space S1) in the accommodating space S1 may be released to the outside of the cabinet body 110. In some embodiments, the pressure relief valves 170, 170A, and 170B each are located at a top of the cabinet body 110. In some embodiments, the pressure relief valves 170, 170A, and 170B are located above the battery system 20.

In some embodiments, the battery system 20 of each energy storage cabinet may include a plurality of battery packs (pack) 210, a battery management system (BMS) 230, and an integrated energy management system (EMS). The battery management systems 230 are located above the battery packs 210 and are electrically connected to the plurality of corresponding battery packs 210 connected in series. In some embodiments, each battery pack 210 has a temperature sensor, configured to sense a temperature of the battery pack 210. In some embodiments, the battery management system 230 is configured to reduce or shut down an output current or an input current of a corresponding battery pack 210 based on a temperature signal of each battery pack 210 received by the battery management system 230. In some embodiments, the battery management system 230 is configured to reduce or shut down an output current or an input current of a corresponding battery pack 210 when a temperature of each battery pack 210 exceeds a threshold (for example, approximately 50°C or 55°C). By way of reducing or shutting down an output current or an input current of a corresponding battery pack 210, a temperature of the battery pack 210 may be reduced, to reduce a risk of fire or extinguish a fire. In some embodiments, the energy management system (EMS) is configured to transfer energy from a battery in a battery system 20 in a specific energy storage cabinet to a battery system 20 in another energy storage cabinet. Through a design of the integrated energy management system, energy of the battery in a battery system 20 in an energy storage cabinet that may face a risk of fire or that has been fired may be transferred to a battery system 20 in another energy storage cabinet, to reduce the risk of fire or extinguishing the fire. In some embodiments, the pressure relief valves 170, 170A, and 170B are respectively located above corresponding battery packs 210.

In some embodiments, the fire extinguishing system may include a liquid injection device (for example, liquid injection devices 40, 40A, and 40B). In some embodiments, the liquid injection device is configured to inject a liquid into an accommodating space S1 of a cabinet body 110 of an energy storage cabinet corresponding to the liquid injection devices and flood a battery system 20 therein to extinguish a fire. In some embodiments, the liquid injected by the liquid injection device 40 may include a liquid having features such as high specific heat, rapid temperature reduction, and/or chemical inertness, or another liquid that can be used for extinguishing a fire, or any combination thereof. In some embodiments, the liquid injection device is configured to be turned on in response to at least one fire signal. In some embodiments, the liquid injection device is configured to be turned on in response to at least one fire signal of an energy storage cabinet corresponding to the liquid injection device. In some embodiments, the liquid injection device 40 is configured to be turned on in response to at least one fire signal of the energy storage cabinet 10. In some embodiments, the liquid injection device 40 is configured to inject a liquid into the accommodating space S1 of the cabinet body 110 of the energy storage cabinet 10 and flood the battery system 20 for fire extinguishing. In some embodiments, the liquid injection device 40A is configured to be turned on in response to at least one fire signal of the energy storage cabinet 10A. In some embodiments, the liquid injection device 40A is configured to inject a liquid into the accommodating space S1 of the cabinet body 110 of the energy storage cabinet 10A and flood the battery system 20 for fire extinguishing. In some embodiments, the liquid injection device 40B is configured to be turned on in response to at least one fire signal of the energy storage cabinet 10B. In some embodiments, the liquid injection device 40B is configured to inject a liquid into the accommodating space S1 of the cabinet body 110 of the energy storage cabinet 10B and flood the battery system 20 for fire extinguishing. Once the battery system 20 is fired, because the battery has a sufficiently high temperature, the battery may continue to perform oxygen-free combustion until energy is used up. Therefore, the battery system 20 cannot be effectively extinguished in a conventional oxygen-exclusion fire extinguishing manner. According to some embodiments of the present disclosure, the battery system 20 is flooded by injecting a liquid, so that a temperature of the battery pack 210 of the battery system 20 can be reduced, thereby extinguishing a fire. In addition, by way of the integrated energy management system (Energy Management System), energy of another battery system 20 in an energy storage cabinet in which a battery system 20 that has been fired is located may be further transferred to a battery system in another energy storage cabinet, thereby further increasing a speed of fire extinguishing.

In some embodiments, the liquid injection device 40 is configured to flood the battery system 20 before the battery system 20 in the energy storage cabinet 10 completely burns. In some embodiments, the liquid injection device 40 is configured to flood the battery system 20 before a fire spreads. In some embodiments, the liquid injection device 40 is configured to be turned on in response to at least one fire signal of the energy storage cabinet 10, and flood the battery system 20 in the energy storage cabinet 10 before a fire spreads. In some embodiments, the liquid injection device 40 is configured to flood the battery system 20 in injection time less than approximately 10 minutes (for example, approximately 10 minutes, 9 minutes, 7 minutes, 5 minutes, 3 minutes, 2.5 minutes, 2 minutes, or other injection time between 2 and 10 minutes).

In some embodiments, the liquid injection device 40 includes an electromagnetic valve 410, an outlet 420, and a pipeline 430. In some embodiments, a liquid provided by the liquid supply system 400 is provided for the liquid injection device 40 through the pipeline 430, the electromagnetic valve 410 is turned on when the liquid injection device 40 receives a fire signal, and the liquid provided by the liquid supply system 400 is injected, through the outlet 420, into the accommodating space S1 of the cabinet body 110 of the energy storage cabinet 10 and floods the battery system 20 for fire extinguishing. In some embodiments, the outlet 420 may be located above the battery pack 210. In some other embodiments, the outlet 420 may alternatively be located at a bottom of the cabinet body 110. The outlet 420 in the present disclosure is not limited to being disposed at a particular position, as long as the outlet 420 can be configured to inject a liquid and flood the battery system 20 for fire extinguishing. In some embodiments, the liquid injection device 40 may include one or more electromagnetic valves 410, one or more outlets 420, and one or more pipelines 430.

In some embodiments, the liquid injection devices 40, 40A, and 40B respectively have electromagnetic valves 410, 410A, and 410B, and may be respectively turned on in response to fire signals of the energy storage cabinets 10, 10A, and 10B, to inject, through corresponding outlets 420, the liquid provided by the liquid supply system 400 into the accommodating spaces S1 of the cabinet bodies 110 of the corresponding energy storage cabinets 10, 10A, and 10B and flood the battery system 20 for fire extinguishing. In some embodiments, the liquid supply system 400 may include a liquid storage tank, a firefighting water supply system (for example, a firefighting water tank), or a combination thereof. In some embodiments, pipelines 430 of the liquid injection devices 40, 40A, and 40B are all connected to a same liquid supply system 400. In some embodiments, the pipelines 430 of the liquid injection devices 40, 40A, and 40B may be connected to different liquid supply systems. For example, the pipelines 430 of the liquid injection devices 40 and 40A may be connected to the liquid storage tank, and the pipeline 430 of the liquid injection device 40B may be connected to the firefighting water supply system. In some embodiments, the liquid supply system 400 may include a water storage tank and a firefighting liquid supply system. The pipelines 430 of the liquid injection devices 40, 40A, and 40B are all connected to the water storage tank. The water storage tank is further connected to the firefighting water supply system. The firefighting water supply system may continuously supply water to the water storage tank, so that the water storage tank may continuously provide water for the liquid injection devices 40, 40A, and 40B.

In some embodiments, the liquid injection device 40 is configured to inject a liquid into the accommodating space S1 of the cabinet body at a flow velocity greater than or equal to at least approximately 6 litres/second (L/s). In some embodiments, the liquid injection device 40 is configured to inject a liquid into the accommodating space S1 of the cabinet body 110 at a flow velocity greater than or equal to 6 L/s, 20 L/s, 35 L/s, 50 L/s, 70 L/s, 80 L/s, or between 6 L/s and 80 L/s. In some embodiments, a height of the cabinet body 110 is less than 3 meters (for example, a height between approximately 2.9 meters, 2.5 meters, 2 meters, or another height between 2 and 2.9 meters). In some embodiments, the liquid storage tank is located above the cabinet body 110, a bottom of the liquid storage tank and a bottom of the accommodating space S1 of the cabinet body 110 are separated by approximately 3 meters, the pipeline 430 has a pipe diameter of approximately 3 inches or 4 inches, and a flow velocity of an injection liquid of the liquid injection device 40 is approximately 6.38 L/s by using the 3-inch pipe diameter, and the flow velocity may be accelerated again by using a larger pipe diameter. In some embodiments, the battery system 20 may be flooded after injection time of approximately 30 minutes to 60 minutes by injecting a liquid into the accommodating space S1 of the cabinet body 110 at a flow velocity of approximately 6.38 L/s. In some embodiments, the liquid storage tank is located above the cabinet body 110, the bottom of the liquid storage tank and the bottom of the accommodating space S1 of the cabinet body 110 are separated by approximately 6 meters, the pipe diameter of the pipeline 430 is approximately 3 inches or 4 inches, a flow velocity of an injection liquid of the liquid injection device 40 is approximately 35.52 L/s, and the flow velocity may be accelerated by using a larger pipe diameter. In some embodiments, the battery system 20 may be flooded after injection time of approximately 30 minutes by injecting a liquid into the accommodating space S1 of the cabinet body 110 at a flow velocity of approximately 35.52 L/s. In some embodiments, the liquid storage tank is located above the cabinet body 110, the bottom of the liquid storage tank and the bottom of the accommodating space S1 of the cabinet body 110 are separated by approximately 15 meters, the pipe diameter of the pipeline 430 is approximately 3 inches or 4 inches, a flow velocity of an injection liquid of the liquid injection device 40 is approximately 70.19 L/s, and the flow velocity may be accelerated by using a larger pipe diameter. In some embodiments, the battery system 20 may be flooded in injection time of approximately 5 minutes by injecting a liquid into the accommodating space S1 of the cabinet body 110 at a flow velocity of approximately 70.19 L/s. In some embodiments, alternatively, the flow velocity of the injection liquid may be accelerated by using liquid storage tanks disposed at different heights in combination with a booster pump, to flood the battery system 20 after different injection time.

In some embodiments, the fire extinguishing system may include a liquid guiding structure disposed below the outlet 420 of the liquid injection device 40. In some embodiments, the liquid guiding structure is configured to: disperse a cooling liquid that is flowed from the outlet 420 and guide the liquid to flow into the battery pack 210, so that the battery pack 210 may first reduce a temperature at an early stage of thermal runaway, to prevent heat from propagating to an adjacent battery pack 210, so as to reduce the temperature early, and further reduce the temperature when the liquid floods the battery system 20, to extinguish the fire. In some embodiments, the liquid guiding structure is any structure that is configured to disperse a liquid and guide the liquid to flow into the battery pack 210, and a size of the liquid guiding structure may be adjusted as required. In some embodiments, the liquid guiding structure is a plate. In some embodiments, the size of the liquid guiding structure is a cross section that fills the accommodating space S1 of the cabinet body 110.

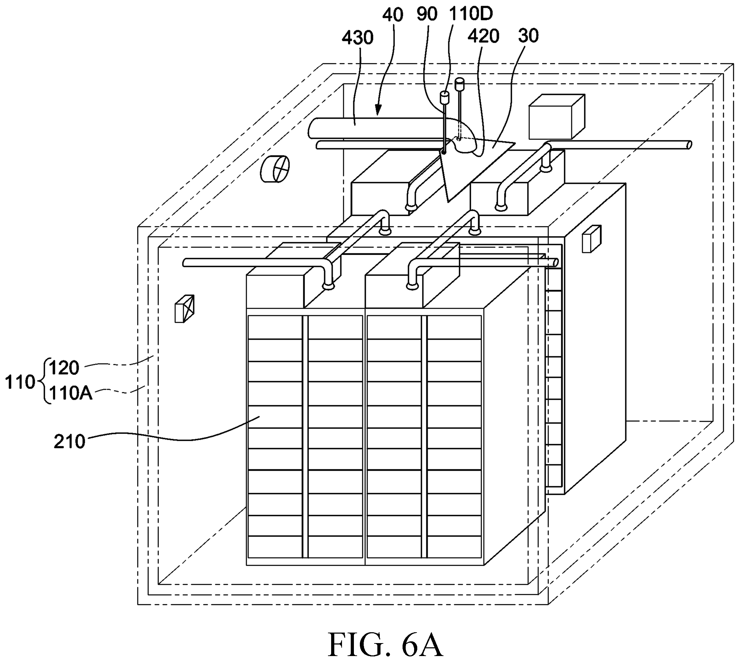

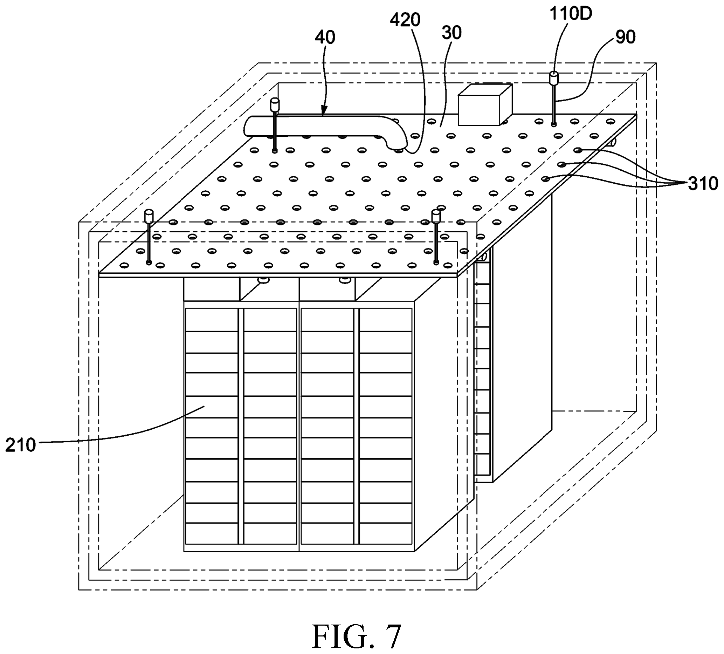

As shown in FIG. 6A to FIG. 6C and FIG. 7, in some embodiments, the liquid guiding structure is a plate 30 that is fastened to a reserved hole in a top wall of the cabinet body 110 by using a fastening member. In some embodiments, a nut 110D may be disposed in the reserved hole in the top wall of the cabinet body 110, and the plate 30 is fastened to the nut 110D by using a bolt 90, so that the plate 30 is suspended in the cabinet body 110 and is positioned below the outlet 420 of the liquid injection device 40. In some embodiments, the liquid guiding structure may alternatively be disposed on the pipeline 430 of the liquid injection device 40, to be connected to a side of the outlet 420 close to the bolt 90.

As shown in FIG. 6A, the plate 30 has an expanded part whose area gradually increases in a direction away from the outlet 420 of the liquid injection device 40. The expanded part may cause the liquid flowing from the outlet 420 to be dispersed and sprinkled to the battery pack 210. In some embodiments, the plate 30 may be triangular, trapezoidal, rectangular, circular, or of any other shape.

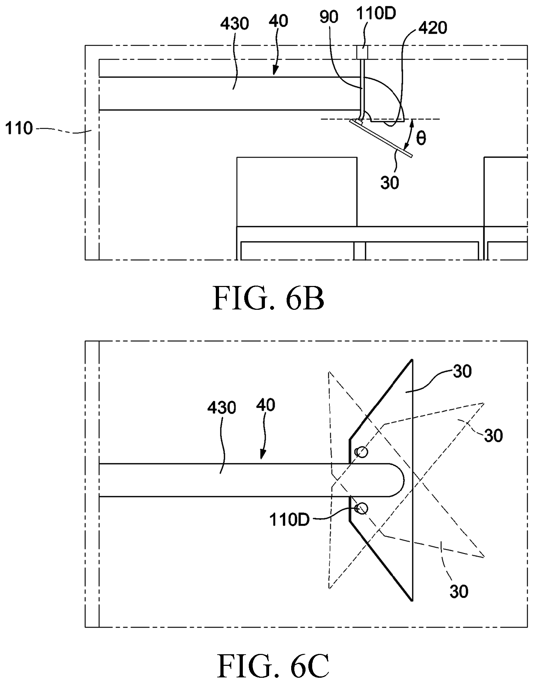

As shown in FIG. 6B, in some embodiments, the expanded part of the plate 30 has a depression angle θ relative to a horizontal plane. A value of the depression angle θ may be adjusted based on a position of the outlet 420, a position of the battery pack 210, or a liquid flow velocity or flow rate. In some embodiments, the depression angle θ of the expanded part of the plate 30 relative to the horizontal plane is approximately 5° to 60°. In some embodiments, the depression angle θ of the expanded part of the plate 30 relative to the horizontal plane may be approximately 10° to 50°, 20° to 40°, or 20° to 30°. In some embodiments, the plate 30 may be a curved surface, so that different regions on the plate 30 have different depression angles θ relative to the horizontal plane. In some embodiments, an area or a surface curvature of the plate 30 may be adjusted based on a requirement, so that a liquid is sprayed to the battery pack 210 having thermal runaway in a manner of achieving maximum temperature reduction efficiency.

As shown in FIG. 6B and FIG. 6C, in some embodiments, the fire extinguishing system may further include a motor (not shown in the figure) electrically connected to the plate 30. In some embodiments, the motor communicates with the energy management system (EMS), so that an operator may control a direction and/or the depression angle θ of the plate 30 by using the energy management system (EMS).

As shown in FIG. 7, in some embodiments, the plate 30 is rectangular and has a plurality of holes 310. In some embodiments, the plate 30 is substantially horizontally suspended below the outlet 420 of the liquid injection device 40, so that a liquid injected onto the plate 30 flows out through the plurality of holes 310. In some embodiments, cross sectional shapes of the plurality of holes 310 in the plate 30 are circular, rectangular, polygonal, irregular, nonaxisymmetric (for example, oval or oblong), or combinations thereof. In some embodiments, the plurality of holes 310 of the plate 30 have a plurality of different cross sectional shapes. In some embodiments, the plurality of holes 310 of the plate 30 are arranged into a matrix. In some embodiments, a distance between the plate 30 and the outlet 420 is greater than a diameter of the outlet 420, to prevent a liquid from being obstructed and affecting a flow rate.

In some embodiments, density and cross sectional areas of the plurality of holes 310 in the plate 30 are a function of a distance to the outlet 420. In some embodiments, the density of the plurality of holes 310 in the plate 30 is in direct proportion to the distance between the hole 310 and the outlet 420 of the liquid injection device 40 (that is, a smaller distance from the outlet 420 indicates smaller density of the holes 310; and a larger distance from the outlet 420 indicates larger density of the holes 310). In some embodiments, the cross sectional areas of the plurality of holes 310 in the plate 30 are in direct proportion to a distance between the holes 310 and the outlet 420 of the liquid injection device 40 (that is, a smaller cross sectional area of the hole 310 closer to the outlet 420 is, a larger cross sectional area of the hole 310 farther from the outlet 420 is). In some embodiments, to ensure that a liquid is evenly sprayed to the battery packs 210, the cross sectional areas and the density of the plurality of holes 310 in the plate 30 are determined based on distribution of the battery packs 210. In some embodiments, a sum of the cross sectional areas of the plurality of holes 310 in the plate 30 is approximately equal to a cross sectional area of the outlet 420 of the liquid injection device 40, to prevent a liquid flowing out from the outlet 20 from accumulating on the plate 30 due to an inability to flow out through the holes 310 in time, or to avoid the holes 310 having excessively large cross sectional areas, which would cause the liquid to flow away at a region near the outlet 420 and result in uneven distribution to the battery pack 210 undergoing thermal runaway.

In some embodiments, the liquid guiding structure is made of any material that does not decompose naturally, has stable properties, can maintain a mechanical strength, and does not affect an internal environment of the cabinet body 110, and may be selected from one or more of the following groups: a single-component metal, an alloy of a plurality of types of metal, a single-or a plurality-component petri-chemical material, a composite material of a plurality of materials, and super high-performance-concrete. In some embodiments, the liquid guiding structure may be provided with a coating to prevent corrosion or aging of the material.

In some embodiments, the fire extinguishing system may further include a spray fire extinguishing apparatus (for example, spray fire extinguishing apparatuses 50, 50A, and 50B). In some embodiments, the spray fire extinguishing apparatus is configured to spray atomized droplets to a battery system 20 of an energy storage cabinet corresponding to the spay fire extinguishing apparatus. In some embodiments, a particle size of an atomized droplet is less than 0.1 centimeter. In some embodiments, a liquid source of the atomized droplet may include a liquid having a high specific heat, capable of rapid cooling, and/or having a characteristic of chemical inertness, a water solution, an electrolyte (for example, sodium sulfate (Na₂SO₄), sodium chloride (NaCl), sodium hydroxide (NaOH), or the like), or another liquid that can be used for fire extinguishing, or any combination of the foregoing. In some embodiments, the spray fire extinguishing apparatus is configured to be turned on in response to at least one fire signal. In some embodiments, the spay fire extinguishing apparatus 50 is configured to spray atomized droplets to the battery system 20 of the energy storage cabinet 10. In some embodiments, the spray fire extinguishing apparatus 50 is configured to be turned on in response to at least one fire signal of the energy storage cabinet 10. In some embodiments, the spray fire extinguishing apparatus 50A is configured to spray atomized droplets to the battery system 20 of the energy storage cabinet 10A. In some embodiments, the spray fire extinguishing apparatus 50A is configured to be turned on in response to at least one fire signal of the energy storage cabinet 10A. In some embodiments, the spay fire extinguishing apparatus 50B is configured to spray atomized droplets to the battery system 20 of the energy storage cabinet 10B. In some embodiments, the spray fire extinguishing apparatus 50B is configured to turned on in response to at least one fire signal of the energy storage cabinet 10B. According to some embodiments of the present disclosure, a temperature of the battery pack 210 of the battery system 20 may be reduced by spraying atomized droplets to the battery system 20, to help achieve an objective of fire extinguishing.

In some embodiments, the spray fire extinguishing apparatus 50 includes an electromagnetic valve 510, an outlet 520, and a pipeline 530. In some embodiments, a liquid provided by the liquid supply system 400 is provided for the spray fire extinguishing apparatus 50 through the pipeline 530, the electromagnetic valve 510 is turned on when the fire extinguishing apparatus 50 receives a fire signal, and the liquid provided by the liquid supply system 400 sprays, through the outlet 520, atomized droplets to the battery system 20 of the energy storage cabinet 10. In some embodiments, the outlet 520 may be located above the battery pack 210. In some embodiments, a diameter of the outlet 520 of the spray fire extinguishing apparatus is smaller than a diameter of the outlet 420 of the liquid injection device. In some embodiments, a diameter of the pipeline 530 of the spray fire extinguishing apparatus is smaller than a diameter of the pipeline 430 of the liquid injection device. In some embodiments, the spray fire extinguishing apparatus 50 may include one or more electromagnetic valve 510, one or more outlets 520, and one or more pipelines 530.

In some embodiments, the spray fire extinguishing apparatuses 50, 50A, and 50B respectively have electromagnetic valves 510, 510A, and 510B, and may be turned on in response to fire signals of the energy storage cabinets 10, 10A, and 10B, to spray, through corresponding outlets 520, the liquid provided by the liquid supply system 400 to battery systems 20 of the corresponding energy storage cabinets 10, 10A, and 10B. In some embodiments, the pipelines 530 of the spray fire extinguishing apparatus 50, 50A, and 50B are all connected to a same liquid supply system 400. In some embodiments, the pipeline 530 of the spray fire extinguishing apparatuses 50, 50A, and 50B may be connected to different liquid supply systems. For example, the pipelines 530 of the spay fire extinguishing apparatuses 50 and 50A may be connected to a liquid storage tank, and the pipeline 530 of the spay fire extinguishing apparatus 50B may be connected to a firefighting water supply system. In some embodiments, the liquid supply system 400 may include a water storage tank and a firefighting water supply system. The pipelines 530 of the spray fire extinguishing apparatuses 50, 50A, and 50B are all connected to the water storage tank. The water storage tank is further connected to the firefighting water supply system. The firefighting water supply system may continuously supply water to the water storage tank, so that the water storage tank may continuously provide water to the spray fire extinguishing apparatuses 50, 50A, and 50B.

In some embodiments, the fire extinguishing system may further include a gas fire extinguishing apparatus (not shown in the figure). In some embodiments, the gas fire extinguishing apparatus is configured to inject a fire extinguishing gas into the battery system 20. In some embodiments, the gas fire extinguishing apparatus may be disposed in the battery system 20. The gas fire extinguishing apparatus may include a plurality of sealed containers filled with a concentrated fire extinguishing gas or a solid fire extinguishing gas. Each of the sealed containers is sealed with an opening thereof through a gel, and these sealed containers are respectively disposed in the battery packs 210. When a temperature of the battery pack 210 rises to a preset temperature (for example, above approximately 80°C), the gel on the sealed container in the battery pack body 210 is fused to open the opening, and the fire extinguishing gas is released from the sealed container and injected into the battery pack 210 fire extinguishing. In some other embodiments, the gas fire extinguishing apparatus may include a gas transfer pipeline and a gas outlet control valve. Each gas outlet control valve is disposed corresponding to each battery pack 210 of the battery system 20. The gas outlet control valve is configured to turned on in response to at least one fire signal of a corresponding battery pack 210. A fire extinguishing gas supply system may provide a fire extinguishing gas for a corresponding gas outlet control valve through a gas supply pipeline, to inject the fire extinguishing gas into the battery pack 210 for fire extinguishing. According to some embodiments of the present disclosure, by way of injecting the fire extinguishing gas into the battery pack 210, fire extinguishing may be directly performed in an ignited region. This helps achieve a fire extinguishing effect in an early stage of battery ignition.

In some embodiments, the fire extinguishing system may further include a fire sensor (for example, fire sensors 60, 60A, and 60B). In some embodiments, the fire sensors 60, 60A, and 60B each are configured to sense a fire condition of the energy storage cabinets 10, 10A, and 10B and generate at least one fire signal. In some embodiments, the fire sensors 60, 60A, and 60B each may include a smoke sensor, a temperature sensor, a flammable gas sensor, or any combination of the foregoing. In some embodiments, the fire sensors 60, 60A, and 60B each may be configured in the cabinet body 110 and located outside the battery pack 210 and the battery management system 230. According to some embodiments of the present disclosure, compared with a sensor configured in the battery pack 210, the fire sensors 60, 60A, and 60B configured outside the battery pack 210 and the battery management system 230 may independently operate, may quickly detect a state of smoke, a gas, and or a temperature in the accommodating space S1, may select, based on a function of the energy storage cabinet and a requirement of a field matching the energy storage cabinet, a detection function required by the energy storage cabinet, and may be easily replaced and repaired. Therefore, the fire sensors 60, 60A, and 60B have advantages of high design flexibility and low heavy work/repair costs.

In some embodiments, the fire extinguishing system may further include a plurality of fire sensors located in the battery packs 210, and these fire sensors are respectively located in the battery packs 210. The plurality of fire sensors in the battery packs 210 may respectively include a smoke sensor, a temperature sensor, a flammable gas sensor, or any combination of the foregoing. In some embodiments, the gas outlet control valve of the gas fire extinguishing apparatus is configured to be turned on in response to at least one fire signal S100 generated by a fire sensor in a battery pack 210 corresponding to the gas outlet control valve. The fire signal S100 may include that a temperature of the battery pack 210 exceeds a threshold (for example, greater than approximately 80°C). In some other embodiments, the gas outlet control valve of the gas fire extinguishing apparatus is configured to be turned on in response to the at least one fire signal S100 generated by a fire sensor outside the corresponding battery pack 210 (for example, at least one fire signal generated by the fire sensors 60, 60A, and/or 60B).

In some embodiments, the fire sensor 60 is configured to sense a fire condition of the energy storage cabinet 10 to generate a fire signal S101, and the spray fire extinguishing apparatus 50 is configured to spray atomized droplets to the battery system 20 of the energy storage cabinet 10 in response to the fire signal S101. In some embodiments, the fire sensor 60 is configured to sense a fire condition of the energy storage cabinet 10 to generate a fire signal S102, and the liquid injection device 40 is configured to: in response to the fire signal S102, inject a liquid into the accommodating space S1 of the cabinet body 110 of the energy storage cabinet 10 and flood the battery system 20 for fire extinguishing. In some embodiments, similar to the fire sensor 60, the fire sensor 60A is configured to sense a fire condition of the energy storage cabinet 10A to generate fire signals S101 and S102, and the spray fire extinguishing apparatus 50A and the liquid injection device 40A are respectively configured to be turned on in response to the fire signals S101 and S102. The fire sensor 60B is configured to sense a fire condition of the energy storage cabinet 10B to generate fire signals S101 and S102, and the spray fire extinguishing apparatus 50B and the liquid injection device 40B are respectively configured to be turned on in response to the fire signals S101 and S102.

In some embodiments, the fire extinguishing system may further include a liquid level sensor (for example, liquid level sensors 70, 70A, and 70B). In some embodiments, the liquid level sensor is configured to sense a liquid level in the accommodating space S1. In some embodiments, the liquid injection device 40 is configured to inject, in response to a liquid level signal generated by the liquid level sensor 70, a liquid to flood the battery pack 210 of the energy storage cabinet 10 without flooding the battery management system 230. In some embodiments, the liquid injection device 40A is configured to inject. in response to a liquid level signal generated by the liquid level sensor 70A, a liquid to flood the battery pack 210 of the energy storage cabinet 10A without flooding the battery management system 230. In some embodiments, the liquid injection device 40B is configured to inject, in response to a liquid level signal generated by the liquid level sensor 70B, a liquid to flood the battery pack 210 of the energy storage cabinet 10B without flooding the battery management system 230. In some embodiments, the liquid level sensors 70, 70A, and 70B may be respectively configured in the cabinet body 110 and located outside the battery pack 210 and the battery management system 230. In some embodiments, the liquid level sensors 70, 70A, and 70B may each include a liquid level meter (for example, a water level meter). In some embodiments, the liquid level sensors 70, 70A, and 70B may each include a flow meter, and a liquid level is calculated by matching a size of the accommodating space S1 with the flow meter. In some embodiments, the liquid level sensors 70, 70A, and 70B may each include an image sensor (for example, CCD). A distance between the image sensor and a liquid surface is detected by using the image sensor disposed in the cabinet body 110, to calculate a liquid level. In some embodiments, the liquid level sensors 70, 70A, and 70B may each include a plurality of liquid level gauges. The plurality of liquid level gauges are respectively disposed at positions of different liquid level heights in one cabinet body 110 (for example, disposed on an inner wall of the cabinet body 110, or configured on an outer side of the battery packs 210 at different heights), to detect real-time liquid levels.

In some embodiments, the control system 80 may be configured to: when receiving the fire signal S100 from the fire sensor 60 or the fire signal S100 in the battery pack 210, turn on the gas fire extinguishing apparatus of the energy storage cabinet 10. In some embodiments, the control system 80 is configured to: further turn on the spray fire extinguishing apparatus 50 of the energy storage cabinet 10 when receiving the fire signal S101 from the fire sensor 60 after the gas fire extinguishing apparatus is turned on. In some embodiments, the control system 80 is configured to: further turn on the liquid injection device 40 of the energy storage cabinet 10 when receiving the fire signal S102 from the fire sensor 60 after the spray fire extinguishing apparatus 50 is turned on.

In some embodiments, the control system 80 may be configured to turned on the gas fire extinguishing apparatus of the energy storage cabinet 10A when receiving the fire signal S100 from the fire sensor 60A or the fire signal S100 in the battery pack 210. In some embodiments, the control system 80 is configured to further turn on the spray fire extinguishing apparatus 50A of the energy storage cabinet 10A when receiving the fire signal S101 from the fire sensor 60A after the gas fire extinguishing apparatus is turned on. In some embodiments, the control system 80 is configured to further turn on the liquid injection device 40A of the energy storage cabinet 10A when receiving the fire signal S102 from the fire sensor 60A after the spray fire extinguishing apparatus 50A is turned on.

In some embodiments, the control system 80 may be configured to turn on the gas fire extinguishing apparatus of the energy storage cabinet 10B when receiving the fire signal S100 from the fire sensor 60B or the fire signal S100 in the battery pack 210. In some embodiments, the control system 80 is configured to further turn on the spray fire extinguishing apparatus 50B of the energy storage cabinet 10B when receiving the fire signal S101 from the fire sensor 60B after the gas fire extinguishing apparatus is turned on. In some embodiments, the control system 80 is configured to further turn on the liquid injection device 40B of the energy storage cabinet 10B when receiving the fire signal S102 from the fire sensor 60B after the spray fire extinguishing apparatus 50B is turned on.

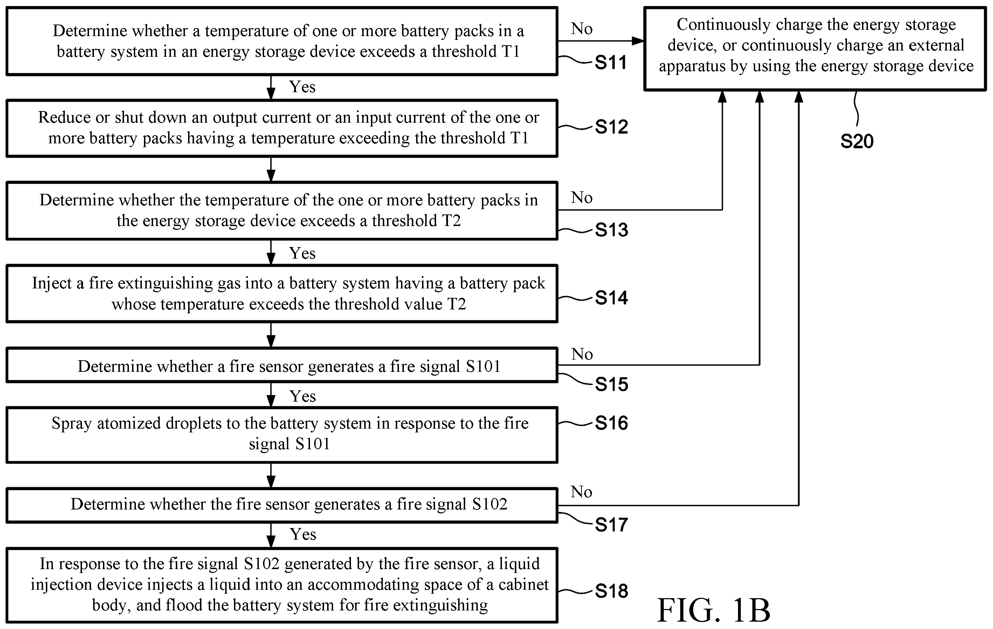

FIG. 1B is a flowchart of a fire extinguishing method for an energy storage device according to some embodiments of the present disclosure. In some embodiments, steps shown in FIG. 1B may be performed by the energy storage device 1 shown in FIG. 1A or another suitable energy storage device.

Step S11: Determine whether a temperature of one or more battery packs 210 in a battery system 20 in an energy storage device exceeds a threshold T1. In some embodiments, in step S11, whether a temperature of one or more battery packs 210 in the energy storage cabinets 10, 10A, and 10B exceeds the threshold T1 is determined. In some embodiments, in step S11, the temperature of the battery pack 210 may be sensed by using a fire sensor (for example, a temperature sensor) in the battery pack 210. In some embodiments, the threshold T1 may be 50°C, 55°C, 60°C, 65°C, or another temperature between 50°C and 65°C.

If it is determined that the temperature of the one or more battery packs 210 in the energy storage device exceeds the foregoing threshold T1, step S12 is performed. Step S12: Reduce or shut down an output current or an input current of the one or more battery packs 210 having a temperature exceeding the threshold T1. In some embodiments, the battery management system 230 is configured to reduce or shut down the output current or the input current of the battery pack 210 when the temperature of the battery pack 210 exceeds the threshold T1.

If it is determined that the temperature of the battery pack 210 in the energy storage device does not exceed the foregoing threshold T1, it is determined that the energy storage device does not have a fire problem, and step S20 is performed, which includes continuously charging the energy storage device, or continuously charging an external apparatus by using the energy storage device. In some embodiments, the energy storage device may continue to be charged by using a power supply apparatus (for example, a power transmission network or a power generation apparatus), or an external apparatus (for example, an electric motor, an electric motor car, or a portable electronic device charging device) may continue to be charged by using the energy storage device.

Step S13: Determine whether the fire sensor generates the fire signal S100. In some embodiments, step S13 is performed to determine whether the temperature of the one or more battery packs 210 in the energy storage device exceeds a threshold T2. In some embodiments, the threshold T2 may be 80°C, 90°C, 100°C, 200°C, or another temperature between 80°C and 200°C. In some embodiments, in step S13, whether the temperature of the one or more battery packs 210 in the energy storage cabinets 10, 10A, and 10B exceeds the threshold T2 is determined by using the fire sensor (for example, a temperature sensor inside or outside the battery pack 210). In some embodiments, step S12 precedes step S13. In some embodiments, the threshold T2 is equal to or greater than the threshold T1. In some embodiments, after step S12 is performed, whether the temperature of the battery pack 210 reduces is determined through step S13, to determine whether the energy storage device still has a fire problem.

If it is determined that the temperature of any one or more of the battery packs 210 in the energy storage device exceeds the threshold T2, step S14 is performed. Step S14: Perform a gas fire extinguishing step. In some embodiments, the gas fire extinguishing step includes: injecting a fire extinguishing gas into a battery system 20 having a battery pack 210 whose temperature exceeds the threshold value T2. In some embodiments, the gas fire extinguishing step includes: in response to the fire signal S100 generated by the fire sensor, injecting a fire extinguishing gas into a battery system 20 of a battery pack 210 corresponding to the fire signal S100. If it is determined that the temperature of the battery pack 210 in the energy storage device does not exceed the foregoing threshold T2, or the fire signal S100 is not generated, it is determined that the energy storage device has no fire problem, and step S20 is performed.

Step S15: Determine whether the fire sensor generates the fire signal S101 corresponding to one or more energy storage cabinets. In some embodiments, the fire signal S101 includes whether a smoke concentration in one or more of the accommodating spaces S1 in the energy storage cabinets 10, 10A, and 10B exceeds a threshold, whether a temperature exceeds a threshold (for example, a temperature approximately 300°C, 400°C, 500°C, 600°C, or another temperature between 300°C and 600°C), whether a flammable gas concentration exceeds a threshold (for example, 25% of an LFL of the flammable gas, for example, a methane concentration being greater than 0.714% or a propane concentration being greater than 0.300%), or any combination thereof. In some embodiments, in step S15, whether the fire sensors 60, 60A, and/or 60B generate the fire signal S101 corresponding to the energy storage cabinets 10, 10A, and/or 10B is determined. In some embodiments, step S14 precedes step S15. In some embodiments, after step S14 is performed, step S15 is performed to determine whether the fire sensor generates the fire signal S101 after the gas fire extinguishing step is performed, to determine whether the energy storage device still has a fire problem.

If it is determined that the fire sensor generates the fire signal S101, step S16 is performed. Step S16: Perform a spray fire extinguishing step in response to the fire signal S101 generated by the fire sensor. In some embodiments, the spray fire extinguishing step includes: spraying atomized droplets to a battery system 20 of an energy storage cabinet that correspondingly generates the fire signal S101. If it is determined that the fire sensor does not generate the fire signal S101, it is determined that the energy storage device has no fire problem, and step S20 is performed.

Step S17: Determine whether the fire sensor generates the fire signal S102 corresponding to one or more energy storage cabinets. In some embodiments, the fire signal S102 includes whether a smoke concentration in the one or more accommodating spaces S1 in the energy storage cabinets 10, 10A, and 10B exceeds a threshold, whether a temperature exceeds a threshold (for example, a temperature approximately 300°C, 400°C, 500°C, 600°C, or another temperature between 300°C and 600°C), whether a flammable gas concentration exceeds a threshold (for example, 25% of an LFL of the flammable gas, for example, a methane concentration being greater than 0.714% or a propane concentration being greater than 0.300%), or any combination thereof. In some embodiments, in step S17, whether the fire sensors 60, 60A, and/or 60B generate the fire signal S102 corresponding to the energy storage cabinets 10, 10A, and/or 10B is determined. In some embodiments, step S16 precedes step S17. In some embodiments, after step S16 is performed, step S17 is performed to determine whether the fire sensor generates the fire signal S102 after a fire is extinguished by spraying atomized droplets, to determine whether the energy storage device still has a fire problem.

If it is determined that the fire sensor generates the fire signal S102, step S18 is performed. Step S18: Perform a flooding step in response to the fire signal S102 generated by the fire sensor. In some embodiments, the flooding step includes: a liquid injection device injecting a liquid into the accommodating space S1 of the cabinet body 110, and flooding the battery system 20 for fire extinguishing.

According to some embodiments of the present disclosure, the fire extinguishing method includes a plurality of steps that are progressive, and may be stopped when effects of temperature reducing and fire extinguishing are achieved at any stage, thereby having effects of efficient fire extinguishing the fire and reducing costs or losses. In addition, according to some embodiments of the present disclosure, fire extinguishing is gradually performed through the plurality of steps that are progressive, and each step helps to reduce a temperature of the battery. Therefore, even if the fire is completely extinguished at a specific step, all steps that have been performed have a superposed temperature reducing effect, so that the fire is extinguished at a relatively efficient manner.

In addition, compared with a fire extinguishing manner in which in an open space, a watering column is injected into an energy storage device from a firefighting water tank, a large amount of water directly flows around the energy storage device to the ground, and cooling water cannot directly contact a large quantity of heat-generating battery packs. As a result, a temperature reducing effect is quite limited. In contrast, according to some embodiments of the present disclosure, in the last step of the fire extinguishing method, the battery pack 210 of the battery system 20 is flooded in the liquid, and the liquid used for flooding is covered by the cabinet body 110, so that the liquid in the accommodating space S1 has a quasi-sealed effect, and the liquid in the accommodating space S1 can be efficiently used for cooling the battery system 20. For example, if the heat required to raise the temperature of the liquid (for example, water) and/or for vaporization comes entirely from the heat released by the battery system 20, to achieve a good effect of temperature reducing and fire extinguishing. In addition, a flammable gas or a poisonous gas generated by a battery in the battery system 20 due to a fire may be accommodated in a space that is in the space S1 and that is not occupied by the liquid. A part of the gas may be discharged through the pressure relief valve, and the other part may be covered by the liquid (when the gas is dissolved in the liquid). Therefore, the poisonous gas may be isolated, and a concentration of the flammable gas may be reduced, to reduce another disaster that may be generated due to a fire in the battery system. In this way, the energy storage device according to some embodiments of the present disclosure can successfully reduce a temperature of a fire by using the foregoing fire extinguishing method, and can extinguish the fire without waiting for fire personnel to arrive at the site. Therefore, the energy storage device has high security, and can be applied to various fields requiring high security, for example, may be used as a charging stake of an electric vehicle and disposed in a building or a neighboring region of a house.

In addition, according to some embodiments of the present disclosure, the liquid injection device 40 is configured to inject a liquid in response to the liquid level signal generated by the liquid level sensor 70, to flood the battery pack 210 of the energy storage cabinet 10 without flooding the battery management system 230. This avoids a dangerous accident of electrocution, current leakage, or even an electric shock due to that the liquid floods the battery management system 230 with a high voltage terminal.

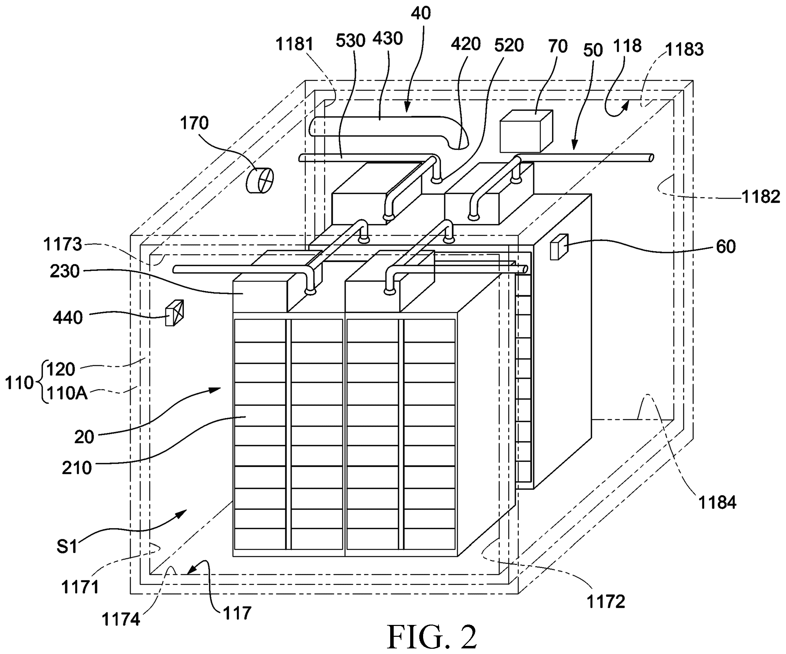

FIG. 2 is a perspective view of an energy storage device according to some embodiments of the present disclosure.

Refer to FIG. 2. An energy storage cabinet 10 may include a cabinet body 110, a battery system 20, a liquid injection device 40, a spray fire extinguishing apparatus 50, a gas fire extinguishing apparatus (not shown in the figure), a fire sensor 60, a liquid level sensor 70, and a pressure relief valve 170. In some embodiments, the battery system 20 may include four groups of battery packs 210 and four corresponding battery management systems 230, but quantities of battery packs 210 and battery management systems 230 are not limited thereto. In some embodiments, the cabinet body 110 has an opening 117 and an opening 118 that respectively correspond to two groups of battery packs 210. A door 130 may be hingedly connected to side edges of the opening 117 and an opening 118 of the cabinet body 110.

In some embodiments, the pressure relief valve 170 is configured to be turned on when a pressure in an accommodating space S1 is greater than a threshold. The threshold is less than a compressive strength of the cabinet body 110. In some embodiments, a liquid injected into the accommodating space S1 may be vaporized due to a high temperature of the battery system 20, and may be discharged through the pressure relief valve 170 when a pressure of a vapor is excessively large. In some embodiments, the pressure relief valve 170 may also be configured to be turned on in response to a signal of the fire sensor, to discharge smoke, a flammable gas (for example, methane, propane, or the like), or a poisonous gas (for example, carbon monoxide).

In some embodiments, the cabinet body 110 may have an outlet control valve 440. In some embodiments, the outlet control valve 440 is configured to be turned on and release the liquid in the accommodating space S1 out of the cabinet body 110. In some embodiments, the outlet control valve 440 is configured to control a flow velocity of liquid injection to be greater than a flow velocity of liquid discharge, so that the battery system 20 may be continuously in a state of being flooded in the liquid. In some embodiments, the control system 80 is configured to control a flow velocity of liquid injection of the liquid injection device 40 and a flow velocity of liquid discharge of the outlet control valve 440.

According to some embodiments of the present disclosure, through a design of the outlet control valve 440, before the liquid flooding the battery pack 210 is vaporized, the liquid is further cooled by a flowing-in liquid, to improve a cooling effect of the liquid in the accommodating space S1 on the battery system 20, and further improve a temperature-reducing and fire-extinguishing effect of the energy storage device.

In some embodiments, the cabinet body 110 include a concrete body 110A and a flame-retardant material layer 120. In some embodiments, the concrete body 110A includes an ultra-high performance concrete (UHPC), the flame-retardant material layer 120 directly contacts one or more inner surfaces of a plurality of walls of the concrete body 110A and is exposed to the accommodating space S1. In some embodiments, the wall of the concrete body 110A has a thickness less than or equal to approximately 5 centimeters. In some embodiments, the wall of the concrete body 110A has a thickness less than or equal to approximately 2.5 centimeters. In some embodiments, a size of the accommodating space S1 may allow operation staff to enter the accommodating space S1 to repair and/or operate a functional component or device disposed in the accommodating space S1.

In some embodiments, the concrete body 110A may include a synthetic fiber, and a steel fiber, a combination of the foregoing, or the like. In some embodiments, a length of the synthetic fiber is approximately 4 millimeters (mm)-approximately 20 millimeters, and a diameter of the synthetic fiber is approximately 0.1 millimeters-0.2 millimeters. In some embodiments, a content of the synthetic fiber in the concrete body 110A is approximately 20 Kg/m³-approximately 60 kg/m³. In some embodiments, a length of the steel fiber is approximately 5 millimeters (mm)-approximately 15 millimeters, and a diameter of the steel fiber is approximately 0.2 millimeters. In some embodiments, a content of the steel fiber to the concrete body 110A is approximately 120 kg/m³-approximately 200 kg/m³. The synthetic fiber and/or the steel fiber may strengthen a bending resistance strength of the concrete body 110. Because the concrete body 110A includes the foregoing synthetic fiber and/or steel fiber, and includes the ultra-high performance concrete. Therefore, a reinforced structure (for example, a reinforced cage and/or a reinforced assembly including a plurality of stirrups) does not need to be disposed in the wall of the concrete body 110A, and the concrete body 110A may have a bending resistance capability similar to that of a conventional reinforced concrete, so that the concrete body 110A may also have a small wall thickness, to reducing an entire weight of the cabinet body 110, and facilitate transportation and movement of the cabinet body 110.

In some embodiments, the concrete body 110A may include one of Portland Type I cement, Portland Type II cement, Portland Type III cement, Portland Type IV cement, and Portland Type V cement at a content of approximately 400 kg/m³-approximately 500 kg/m³, and another of Portland Type I cement, Portland Type II cement, Portland Type III cement, Portland Type IV cement, and Portland Type V cement at a content of approximately 400 kg/m³-approximately 500 kg/m³. In some embodiments, the concrete body 110A may include silicon fume at a content of approximately 120 kg/m³-approximately 180 kg/m³. In some embodiments, the concrete body 110A may include silica sand at a content of approximately 900 kg/m³-approximately 1000 kg/m³. In some embodiments, the concrete body 110A may include quartz powder at a content of approximately 30 kg/m³-approximately 150 kg/m³. In some embodiments, because of a combination of the silicon fume and the quartz powder, the concrete body 110A has a higher compressive strength than a common concrete.

In some embodiments, a unit structural weight of the concrete body 110A is equal to or greater than approximately 2300 kg/m³. In some embodiments, a unit structural weight of the concrete body 110A is approximately 2300 kg/m³-approximately 2700 kg/m³. In some embodiments, the compressive strength of the concrete body 110A is equal to or greater than approximately 120 MPa. In some embodiments, the compressive strength of the concrete body 110A is approximately 120 MPa-approximately 180 MPa. In some embodiments, an extreme bending resistance strength of the concrete body 110A is greater than approximately 15 MPa. In this way, a reinforced cage and/or a reinforced assembly including a plurality of stirrups that are/is used for improving the bending resistance strength does not need to be disposed in the concrete body 110A, so that the concrete body 110A may have a small wall thickness, to reduce an entire weight of the cabinet body 110. In addition, the concrete body 110A may provide a high compressive strength and a high bending resistance strength for the cabinet body 110, and therefore, may be applied to an extreme environment (for example, an environment withstanding high-temperature flame) while still maintaining integrity of an entire structure.

In some embodiments, a heat conductivity coefficient of the concrete body 110A is equal to or less than approximately 1.8 W/m K. In some embodiments, a heat conductivity coefficient of the concrete body 110A is approximately 1.6 W/m K-approximately 1.8 W/m K. In comparison with a metal material or a conventional concrete (whose heat conductivity coefficient is approximately 1.9 W/m K-approximately 2.1 W/m K), the concrete body 110A of the present disclosure has a desirable thermal insulation effect. This is beneficial to relieve heat conduction between the accommodating space S1 and the outside of the concrete body 110A. When an apparatus or a component in the accommodating space S1 need to be maintained at a specific high temperature or low temperature, the desirable thermal insulation effect of the concrete body 110A helps to reduce energy required by an air conditioner, to reduce operation costs, and have additional effects of environmental protection, energy saving, and reducing carbon.

In some embodiments, the flame-retardant material layer 120 includes a ceramic fiber board, a ceramic fiber blanket, refractory mud, an insulating refractory brick, and a lightweight aggregate refractory material, a heat insulation material, or any combination of thereof. In some embodiments, the flame-retardant material layer 120 has a thickness of less than or equal to approximately 5 centimeters. In some embodiments, the flame-retardant material layer 120 has a thickness of less than or equal to approximately 2.5 centimeters. In some embodiments, a prepared concrete slurry may be poured into a mold having a predetermined shape. Before the concrete slurry hardens, the flame-retardant material layer 120 may be attached to a semifinished product formed from the concrete slurry, and a curing process may subsequently be performed. In this way, the hardened concrete may be firmly bonded to the flame-retardant material layer 120, so that a combined interface between the concrete body 110A and the flame-retardant material layer 120 has a high bonding strength. Therefore, the flame-retardant material layer 120 does not fall out due to high heat.

In some embodiments, the cabinet body 110 is configured to tolerate a flame at a temperature equal to or higher than at least approximately 150°C. In some embodiments, the cabinet body 110 is configured to tolerate a flame at a temperature equal to or greater than approximately 150°C, 200°C, 300°C, 400°C, 500°C, 600°C, 700°C, 800°C, 900°C, 1000°C, 1100°C, 1200°C, or another temperature between 150°C and 1200°C. In some embodiments, the cabinet body 110 is configured to have a compressive strength greater than at least approximately 60 MPa. In some embodiments, the cabinet body 110 is configured to have a compressive strength greater than approximately 60 MPa, 70 MPa, 80 MPa, 90 MPa, 100 MPa, 110 MPa, 120 MPa, 130 MPa, 140 MPa, 150 MPa, 160 MPa, 170 MPa, 180 MPa, or another compressive strength between 60 MPa and 180 MPa. In some embodiments, the cabinet body 110 is configured to tolerate a flame at a temperature equal to or greater than approximately 600°C and have a compressive strength greater than approximately 120 MPa. In some embodiments, the cabinet body 110 is configured to tolerate a flame at a temperature equal to or greater than approximately 900°C. In some embodiments, the cabinet body 110 is configured to tolerate a flame at a temperature ranges from approximately 900°C to approximately 1200°C. In some embodiments, the concrete body 110A and the flame-retardant material layer 120 as a whole are configured to tolerate a flame at a temperature equal to or greater than approximately 900°C. In some embodiments, the concrete body 110A and the flame-retardant material layer 120 as a whole are configured tolerate a flame at a temperature equal to or higher than approximately 900°C-approximately 1200°C.

In some other embodiments, the cabinet body 110 may also include a structural steel material, for example, a thick metal plate. In some embodiments, the cabinet body 110 made of the structural steel material is configured to tolerate a flame at a temperature equal to or greater than approximately 150°C (for example, a flame at temperature equal to or greater than approximately 150°C, 200°C, 300°C, 400°C, 500°C, 600°C, 700°C, 800°C, 900°C, 1000°C, 1100°C, 1200°C, or at another temperature between 150°C and 1200°C) and have a compressive strength greater than approximately 60 MPa (for example, a compressive strength greater than approximately 60 MPa, 70 MPa, 80 MPa, 90 MPa, 100 MPa, 110 MPa, 120 MPa, 130 MPa, 140 MPa, 150 MPa, 160 MPa, 170 MPa, 180 MPa, or another compressive strength between 60 MPa and 180 MPa).

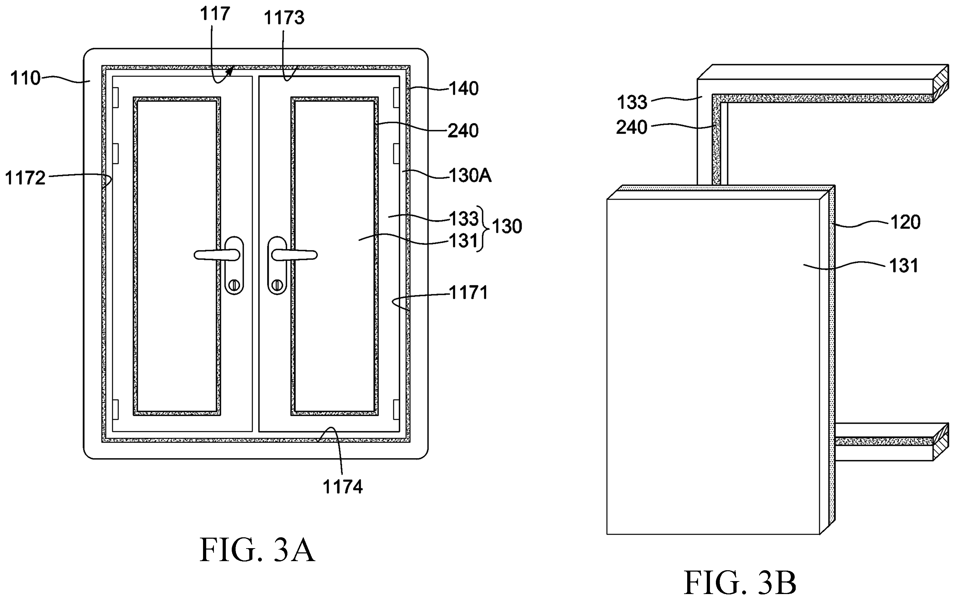

FIG. 3A is a partial schematic diagram of the cabinet body 110 of the energy storage device according to some embodiments of the present disclosure.

As shown in FIG. 2 and FIG. 3A. The energy storage cabinet 10 further includes a door 130 and buffer members 140 and 240. In some embodiments, the door 130 may be hingedly connected to the side edge of the opening 117 of the cabinet body 110. In some embodiments, the door 130 may be hingedly connected to side edges 1171 and 1172 of the opening 117 of the cabinet body 110 through a door frame 130A. In some embodiments, the door 130 includes two door panels. The two door panels open left and right respectively, and are respectively hingedly connected to the side edges 1171 and 1172 of the opening 117 of the cabinet body 110. In some embodiments, the buffer member 140 is used for sealing gaps between the door 130 and side edges (for example, side edges 1171, 1172, 1173, and 1174) of the opening 117 of the cabinet body 110. In some embodiments, as shown in FIG. 2, the energy storage cabinet 10 may further include another door 130, and the door 130 is hingedly connected, through a door frame 130A, to side edges 1181 and 1182 of the opening 118 of the cabinet body 110. In some embodiments, the door frame 130A is disposed on the cabinet body 110, and the buffer member 140 is used for sealing gaps between the door frame 130A and the side edges (for example, the side edges 1171, 1172, 1173, and 1174) of the opening 117 of the cabinet body 110. In some embodiments, as shown in FIG. 2, the buffer member 140 is used for sealing gaps between the door frame 130A and side edges (for example, side edges 1181, 1182, 1183, and 1184) of the opening 118 of the cabinet body 110.

In some embodiments, the door 130 includes a concrete layer 131 and a door panel frame 133, and the concrete layer 131 is installed in the door panel frame 133. In some embodiments, the buffer member 240 is used for sealing a gap between the concrete layer 131 and the door panel frame 133.

In some embodiments, the buffer member 140 is configured to deform or crack when a pressure in the accommodating space S1 is greater than a threshold, to generate a pressure relief buffer mechanism, and the threshold is less than the compressive strength of the cabinet body 110. In some embodiments, the buffer member 240 is configured to deform or crack when a pressure in the accommodating space S1 is greater than a threshold, to generate a pressure relief buffer mechanism, and the threshold is less than a compressive strength of the cabinet body 110. In some embodiments, the liquid injection device 40 injects a liquid into the accommodating space S1 of the cabinet body 110 at a first flow velocity, a liquid in the accommodating space S1 overflows the cabinet body 110 by using the pressure relief buffer mechanism at a second flow velocity, and the first flow velocity is greater than the second flow velocity. In some embodiments, the buffer members 140 and 240 include silicon carbide.

According to some embodiments of the present disclosure, through a design of the buffer members 140 and 240, a partial liquid can flow out of the cabinet body 110, and a flow velocity of liquid injection is maintained to be greater than a flow velocity of liquid discharge, so that the battery system 20 can be continuously in a state of being flooded in the liquid, and liquid charge does not need to be controlled by using an additional pressure sensor and control system. This has effects of simple operation and reduced costs. In addition, through the design of the buffer members 140 and 240, before a liquid flooding the battery pack 210 is vaporized, the liquid is further cooled by a flowing-in liquid, to improve a cooling effect of the liquid in the accommodating space S1 on the battery system 20, and further improve a temperature-reducing and fire-extinguishing effect of the energy storage device.

FIG. 3B is a partial exploded view of the door 130 of the cabinet body 110 of the energy storage device according to some embodiments of the present disclosure.

In some embodiments, the door 130 includes the concrete layer 131 and the flame-retardant material layer 120 disposed on the concrete layer 131. In some embodiments, the concrete layer 131 and the flame-retardant material layer 120 together forms a door panel, and the buffer member 240 is used for sealing a gap between the door panel and the door panel frame 133.

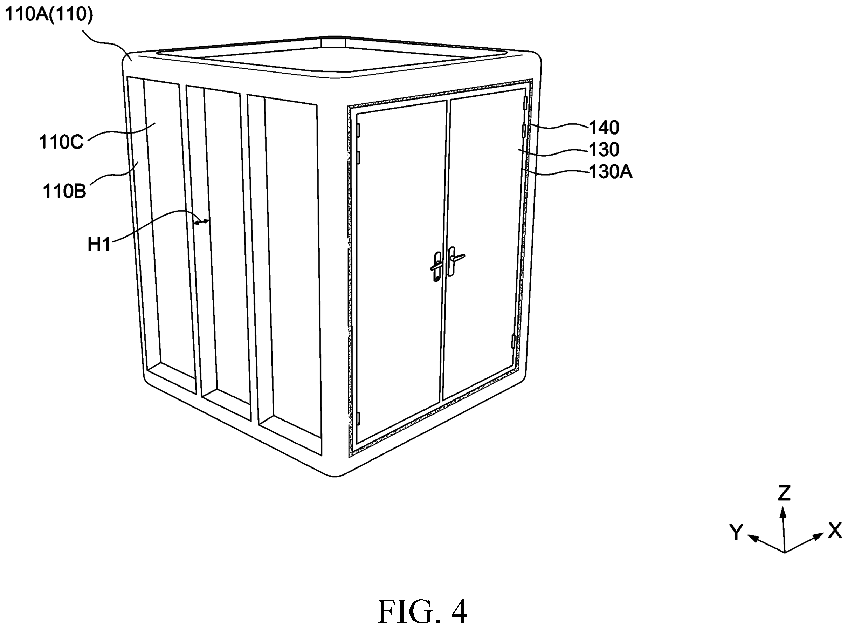

FIG. 4 is a perspective view of the cabinet body 110 of the energy storage device according to some embodiments of the present disclosure.

In some embodiments, the concrete body 110A of the cabinet body 110 further includes a plurality of ribs 110B, and the rib 110B protrudes from a wall 110C of the concrete body 110A. In some embodiments, a protrusion height H1 of the rib 110B is greater than a thickness of the wall 110C. In some embodiments, the protrusion height H1 of the rib 110B is approximately 2 to 5 times of the thickness of the wall 110C. In some embodiments, the wall 110C of the concrete body 110A has a thickness less than or equal to approximately 2.5 centimeters, and the protrusion height H1 of the rib 110B is approximately 10 to 13 centimeters.

In some embodiments, the concrete body 110A is integrally formed. In some embodiments, the concrete body 110A may be formed as an integral structure by pouring a mixed concrete slurry into a mold having a predetermined shape, followed by curing and demolding.

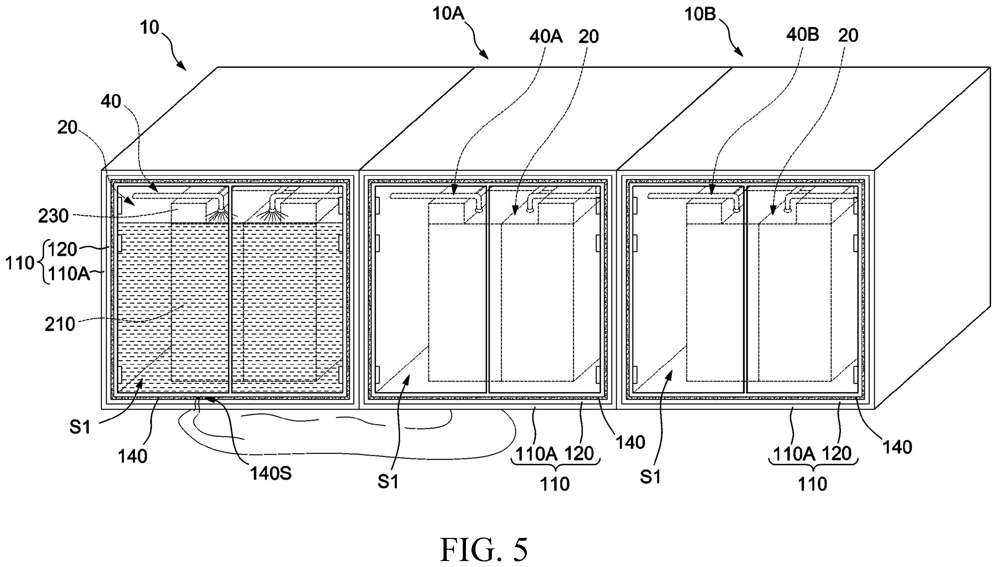

FIG. 5 is a schematic diagram of the energy storage device 1 according to some embodiments of the present disclosure.

In some embodiments, the energy storage device 1 includes the plurality of energy storage cabinets 10, 10A, and 10B, and the fire extinguishing system further includes the plurality of liquid injection devices 40, 40A, and 40B. In some embodiments, at least two of the plurality of energy storage cabinets may be completely arranged close to each other, for example, may be arranged close to each other in pairs, or may be arranged close to each other in a group of a plurality of energy storage cabinets. The plurality of energy storage cabinets arranged close to each other may constitute a multi-unit combined energy storage device of a container-like type. In some other embodiments, the plurality of energy storage cabinets 10, 10A, and 10B may also be disposed apart from each other. As shown in FIG. 5, in some embodiments, when a fire occurs in the energy storage cabinet 10, and after a step of flooding the energy storage cabinet 10 is performed, a liquid overflowing from the energy storage cabinet 10 through a pressure relief buffer mechanism 140S of the buffer member 140 may be isolated from the battery system 20 of the energy storage cabinet 10A by the cabinet body 110 of the energy storage cabinet 10A. In addition, in some embodiments, because the cabinet body 110 is configured to tolerate a flame at a high temperature (for example, a flame at a temperature equal to or higher than approximately 600°C) and have a large compressive strength (for example, a compressive strength greater than approximately 120 MPa), even if a fire occurs in an adjacent energy storage cabinet, and high heat is generated or a liquid that overflows because a flooding step is performed, energy storage cabinets (for example, the energy storage cabinets 10A and 10B) that do not suffer a fire can still run well without being affected.

As used herein, terms "approximately", "substantially", "basically", and "about" are used to describe and consider small variations. When used in combination with an event or a situation, the terms may refer to a case in which an event or a situation occurs accurately and a case in which the event or situation occurs approximately. For example, when being used in combination with a value, the terms may refer to a variation range of less than or equal to ±10% of the value, for example, the variation range of less than or equal to ±5%, less than or equal to ±4%, less than or equal to ±3%, less than or equal to ±2%, less than or equal to ±1%, less than or equal to ±0.5%, less than or equal to ±0.1%, or less than or equal to ±0.05%. For example, if a difference between two values is less than or equal to ±10% of an average value of the value, for example, less than or equal to ±5%, less than or equal to ±4%, less than or equal to ±3%, less than or equal to ±2%, less than or equal to ±1%, less than or equal to ±0.5%, less than or equal to ±0.1%, or less than or equal to ±0.05%, it may be considered that the two values are "substantially" or "approximately" the same. For example, being "substantially" parallel may refer to an angular variation range of less than or equal to ±10° relative to 0°, for example, the angular variation range of less than or equal to ±5°, less than or equal to ±4°, less than or equal to ±3°, less than or equal to ±2°, less than or equal to ±1°, less than or equal to ±0.5°, less than or equal to ±0.1°, or less than or equal to ±0.05°. For example, being "substantially" perpendicular may refer to an angular variation range of less than or equal to ±10° relative to 90°, for example, the angular variation range of less than or equal to ±5°, less than or equal to ±4°, less than or equal to ±3°, less than or equal to ±2°, less than or equal to ±1°, less than or equal to ±0.5°, less than or equal to ±0.1°, or less than or equal to ±0.05°.

If a displacement between two surfaces is not greater than 5 µm, not greater than 2 µm, not greater than 1 µm, or not greater than 0.5 µm, it may be considered that the two surfaces are coplanar or substantially coplanar.

As used herein, the terms "conductive (conductive)", "electrically conductive (electrically conductive)" and " conductivity" refer to a capability to transport a current. Conductive materials generally indicate those materials that exhibit little or zero resistance to a flow of the current. One measure of conductivity is Siemens per meter (S/m). Generally, a conductive material is a material having conductivity that is greater than approximately 10⁴ S/m (such as at least 10⁵ S/m or at least 10⁶ S/m). Conductivity of a material may sometimes change with a temperature. Unless otherwise specified, the conductivity of the material is measured at a room temperature.

As used herein, singular terms "a", "an", and "the" may include a plurality of referents unless the context clearly dictates otherwise. In the descriptions of some embodiments, assemblies disposed "on" or "above" another assembly may include a case in which a previous assembly is directly on a latter assembly (for example, in physical contact with the latter assembly), and a case in which one or more intervention assemblies are located between the previous assembly and the latter assembly.

Although the present disclosure is described and described with reference to specific embodiments of the present disclosure, these descriptions and illustrations do not limit the present disclosure. A person skilled in the art may clearly understand that various changes can be made and equivalent components may be replaced in embodiments without departing from a true spirit and a scope of the present disclosure as defined by a patent scope of the appended claims. The drawings may not be drawn to scale. Due to variants in a manufacturing process and the like, there may be a difference between reproduction of the process and an actual device in the present disclosure. There may be other embodiments of the present disclosure that are not specifically shown. The specification and drawings should be considered as illustrative rather than limitative. Modifications may be made to adapt a specific situation, a material, composition of a substance, a method, or a program to the objective, the spirit, and the scope of the present disclosure. All such modifications are intended to fall within the scope of the patent scope of the appended claims. Although the method disclosed in this specification is described with reference to a particular operation performed in a particular sequence, it may be understood that these operations may be combined, sub-divided, or re-sequenced to form an equivalent method without departing from the teaching of the present disclosure. Therefore, unless specifically indicated in this specification, the sequence and grouping of the operations do not limit the present disclosure.

### Description for reference signs

1: Energy storage device
10: Energy storage cabinet
10A: Energy storage cabinet
10B: Energy storage cabinet
110: Cabinet body
20: Battery system
30: Plate
40: Liquid injection device
40A: Liquid injection device
40B: Liquid injection device
50: Spray fire extinguishing apparatus
50A: Spray fire extinguishing apparatus
50B: Spray fire extinguishing apparatus
60: Fire sensor
60A: Fire sensor
60B: Fire sensor
70: Liquid level sensor
70A: Liquid level sensor
70B: Liquid level sensor
80: Control system
90: Screw
110A: Concrete body
110B: Rib
110C: Wall
110D: Nut
117: Opening
118: Opening
120: Flame-retardant material layer
130: Door
131: Concrete layer
133: Door panel frame
140: Buffer member
140S: Pressure relief buffer mechanism
170: Pressure relief valve
170A: Pressure relief valve
170B: Pressure relief valve
210: Battery pack
230: Battery management system
240: Buffer member
310: Hole
400: Liquid supply system
410: Electromagnetic valve
410A: Electromagnetic valve
410B: Electromagnetic valve
420: Outlet
430: Pipeline
440: Outlet control valve
510: Electromagnetic valve
510A: Electromagnetic valve
510B: Electromagnetic valve
520: Outlet
530: Pipeline
1171: Side edge
1172: Side edge
1173: Side edge
1174: Side edge
1181: Side edge
1182: Side edge
1183: Side edge
1184: Side edge
H1: Height
θ: Depression angle
S1: Accommodating space
S11: Step
S12: Step
S13: Step
S14: Step
S15: Step
S16: Step
S17: Step
S18: Step
S20: Step

## Claims

1. An energy storage device, comprising:
an energy storage cabinet, comprising a cabinet body, the cabinet body comprising a concrete body and a flame-retardant material layer, being configured to tolerate a flame at a temperature equal to or greater than approximately 400°C and have a compressive strength greater than approximately 60 MPa; the cabinet body having an accommodating space for accommodating at least one battery system; and the cabinet body further comprising a pressure relief valve, and the pressure relief valve being configured to open when a pressure in the accommodating space is greater than a threshold; and
a fire extinguishing system, comprising a liquid injection device and a liquid guiding structure, the liquid injection device being configured to inject a liquid into the liquid guiding structure, and the liquid guiding structure being configured to: disperse the liquid and allow the liquid to flow into the accommodating space of the cabinet body, and flood the at least one battery system for fire extinguishing.

2. The energy storage device according to claim 1, wherein the liquid guiding structure is a plate.

3. The energy storage device according to claim 2, wherein the plate has an expanded part in a direction away from the liquid injection device, the expanded part having a depression angle relative to a horizontal plane.

4. The energy storage device according to claim 3, further comprising:
an energy management system (EMS); and
a motor, connected to the plate, wherein
the energy management system (EMS) controls the depression angle and/or a direction of the expanded part of the plate by using the motor.

5. The energy storage device according to claim 4, wherein the depression angle is approximately 5 to 60 degrees.

6. The energy storage device according to claim 2, wherein the plate has a plurality of holes.

7. The energy storage device according to claim 6, wherein the plurality of holes are arranged into a matrix.

8. The energy storage device according to claim 6, wherein a density of the plurality of holes is in direct proportion to a distance between the holes and the liquid injection device.

9. The energy storage device according to claim 6, wherein cross sectional areas of the plurality of holes are in direct proportion to a distance between the holes and the liquid injection device.

10. The energy storage device according to claim 6, wherein a sum of cross sectional areas of the plurality of holes is approximately equal to a cross sectional area of an outlet of the liquid injection device.

11. The energy storage device according to claim 1, wherein the energy storage cabinet further comprise:
a door, hingedly connected to an opening side edge of the cabinet body; and
a buffer member, configured to seal a gap between the door and the opening side edge of the cabinet body, the buffer member being configured to deform or crack when the pressure in the accommodating space is greater than the threshold to generate a pressure relief buffer mechanism, and the threshold being less than a compressive strength of the cabinet body.

12. The energy storage device according to claim 11, wherein the liquid injection device injects the liquid into the accommodating space of the cabinet body at a first flow velocity, the liquid in the accommodating space overflows out of the cabinet body at a second flow velocity through the pressure relief buffer mechanism, and the first flow velocity is greater than the second flow velocity.

13. The energy storage device according to claim 1, wherein
the fire extinguishing system further comprises a liquid level sensor, the liquid level sensor being configured to sense a liquid level in the accommodating space; and
the at least one battery system comprises a plurality of battery packs (pack) and a battery management system (battery management system, BMS) located above the plurality of battery packs, and the liquid injection device is configured to, in response to a liquid level signal of the liquid level sensor, inject the liquid to flood the battery packs without flooding the battery management system.

14. The energy storage device according to claim 1, wherein the concrete body comprises an ultra-high performance concrete (UHPC), and the flame-retardant material layer directly contacts one or more inner surfaces of a plurality of walls of the concrete body and is exposed to the accommodating space.

15. The energy storage device according to claim 14, wherein the concrete body further comprises a plurality of ribs, the plurality of ribs protruding from the plurality of walls; and a protrusion height of the plurality of ribs is greater than a thickness of the plurality of walls.

16. The energy storage device according to any one of claims 2 to 10, further comprising a plurality of energy storage cabinets, the fire extinguishing system further comprises a plurality of liquid injection devices and a plurality of liquid guiding structures respectively corresponding to the plurality of liquid injection devices, each liquid injection device is configured to inject the liquid into each liquid guiding structure, and each liquid guiding structure is configured to disperse the liquid and allow the liquid to flow into each accommodating space of each cabinet body, to flood each of the at least one battery system for fire extinguishing.

17. The energy storage device according to claim 16, wherein the energy storage cabinets further comprise the energy management system (EMS), the energy management system (EMS) being configured to transfer energy of a battery in at least one battery system of one of the energy storage cabinets to at least one battery system of another one of the energy storage cabinets.

18. A fire extinguishing method for an energy storage device, comprising:
providing an energy storage device, comprising:
an energy storage cabinet, comprising a cabinet body, the cabinet body comprising a concrete body and a flame-retardant material layer, being configured to tolerate a flame at a temperature equal to or greater than approximately 400°C and have a compressive strength greater than approximately 60 MPa; and the cabinet body having an accommodating space for accommodating at least one battery system, and the cabinet body further comprising a pressure relief valve; and
a fire extinguishing system, comprising a liquid injection device, a liquid guiding structure, and a fire sensor, the fire sensor being configured to sense a fire condition of the energy storage cabinet and generate at least one fire signal;
performing a flooding step, comprising: in response to a first fire signal generated by the fire sensor, injecting a liquid into the liquid guiding structure by using the liquid injection device, the liquid guiding structure being configured to: disperse the liquid and allow the liquid to flow into the accommodating space of the cabinet body, and flood the at least one battery system for fire extinguishing; and
opening the pressure relief valve when a pressure in the accommodating space is greater than a threshold.

19. The fire extinguishing method according to claim 18, wherein the liquid guiding structure is a plate.

20. The fire extinguishing method according to claim 19, wherein the plate has an expanded part in a direction away from the liquid injection device, the expanded part having a depression angle relative to a horizontal plane.

21. The fire extinguishing method according to claim 20, further comprising:
an energy management system (EMS); and
a motor, connected to the plate, wherein
the energy management system (EMS) controls the depression angle and/or a direction of the expanded part of the plate by using the motor.

22. The fire extinguishing method according to claim 21, wherein the depression angle is approximately 5 to 60 degrees.

23. The fire extinguishing method according to claim 19, wherein the plate has a plurality of holes.

24. The fire extinguishing method according to claim 23, wherein the plurality of holes are arranged into a matrix.

25. The energy storage device according to claim 23, wherein a density of the plurality of holes is in direct proportion to a distance between the holes and the liquid injection device.

26. The fire extinguishing method according to claim 23, wherein cross sectional areas of the plurality of holes are in direct proportion to a distance between the hole and the liquid injection device.

27. The fire extinguishing method according to claim 23, wherein a sum of cross sectional areas of the plurality of holes is approximately equal to a cross sectional area of an outlet of the liquid injection device.

28. An energy storage device, comprising:
an energy storage cabinet, comprising a cabinet body, the cabinet body comprising a concrete body and a flame-retardant material layer, and being configured to tolerate a flame at a temperature equal to or greater than approximately 400°C; the cabinet body having an accommodating space for accommodating at least one battery system; and the cabinet body further comprising a pressure relief valve, and the pressure relief valve being configured to open when a pressure in the accommodating space is greater than a threshold; and
a fire extinguishing system, comprising a liquid injection device and a liquid guiding structure, the liquid injection device being configured to inject a liquid into the liquid guiding structure, and the liquid guiding structure being configured to: disperse the liquid and allow the liquid to flow into the accommodating space of the cabinet body, and flood the at least one battery system for fire extinguishing.
